Europäisches Patentamt

(19) European Patent Office

Office européen des brevets

(11) Publication number: 0 129 965
A2

## (12) EUROPEAN PATENT APPLICATION

(21) Application number: 84302749.1

(22) Date of filing: 24.04.84

(51) Int. Cl.⁴: H 01 M 10/42
H 01 M 6/42

(30) Priority: 29.04.83 GB 8311738

(43) Date of publication of application:
02.01.85 Bulletin 85/1

(84) Designated Contracting States:
AT BE CH DE FR GB IT LI LU NL SE

(71) Applicant: WEATHERFORD/LAMB, INC.
4605 Post Oak Place P.O. Box 27608
Houston Texas 77227(US)

(72) Inventor: Miller, Stephen Francis
The Prod. Eng. Res. Association of Great Britain
Melton Mowbray Leicestershire LE13 0PB(GB)

(72) Inventor: Medlock, Harry
The Prod. Eng. Res. Association of Great Britain
Melton Mowbray Leicestershire LE13 0PB(GB)

(74) Representative: Boydell, John Christopher et al,
Stevens, Hewlett & Perkins 5 Quality Court Chancery
Lane
London, WC2A 1HZ(GB)

(54) Battery power pack.

(57) An intrinsically safe battery power pack comprising a battery of series-connected cells connected to a plurality of positive output terminals 21 to 29, each current limited by a respective resistor R1 to R9. The negative terminal of the cells is connected to a plurality of commoned negative output terminals 16 to 19. The power pack may be encapsulated within its container (not shown) and means are provided for venting the cells to atmosphere.

./...

FIG.1

## "BATTERY POWER PACK"

This invention relates to a battery power pack by which is meant a d.c. power supply unit for electrically operated equipment, which power unit comprises a plurality of cells housed within a container and having distributed output and, preferably, charging input terminals.

There is a requirement in certain fields of industry and research for an intrinsically safe power supply unit. Such a unit must be safe under all anticipated conditions of use, including electrical fault conditions, and mechanical damage due to mishandling. Needless to say, therefore, the unit should be sufficiently robust to withstand within reason any mishandling to which it may be subjected during use. More important as far as the present application is concerned, however, is the requirement that the unit be electrically safe under all anticipated conditions of use. This requirement is necessary where the supply is used in particularly hazardous conditions, such as those which pertain on oil rigs, where a single spark or excess temperature resulting from an equipment malfunction could cause an explosion.

In the present invention, this problem is tackled by providing not just one pair of output terminals - one positive, one negative - but a plurality of output terminals each being provided with means for limiting the power output, even under short conditions, to a level below that able to generate dangerous sparks. In an embodiment of the invention each of the output terminals of one polarity is current limited by means of a respective resistance means. The opposite polarity is brought out to a plurality of terminals which may or may not equal the number of output terminals of said one polarity. In practice, depending upon the current to be supplied, the number of terminals of said other polarity may be fewer or may be only one, provided always that the laid down intrinsically safe ratings for any one terminal are not exceeded.

The cells within the power supply may be connected in series or in a combination of series and parallel connections for extra current. A parallel-only connection, whilst possible, is unlikely since the e.m.f. generated by a single cell is less than the intrinsically safe voltage level. The cells may be of the rechargeable type, in which case an additional terminal for charging must be provided. Lead acid cells would be suitable, but nickel cadmium cells have proved preferable in the particular application envisaged for the battery pack, where high temperatures are possible.

Heat generated by the cells in use can be a problem in a hazardous environment and in an embodiment of the invention, the cells are potted within their container to assist transfer of heat away from the cells. Such potting of the cells also prevents buildup of an explosive mixture of gases in air spaces within the container, but does lead to the problem of venting of the cells themselves. In a preferred embodiment of the invention, therefore, the vent outputs from each cell within the container are interconnected by tubing, the ends of which are vented to the exterior of the container. One or more circuits of tubing may be provided as convenient. The use of tubing in this way allows for positive venting of the cells.

In order that the invention may be better understood, an embodiment thereof will now be described by way of example only and with reference to the accompanying drawings in which:-

Figure 1 is a circuit diagram of one embodiment of a battery power pack according to the invention;

Figure 2 is a plan view of the power pack prior to being placed in its container and encapsulated; and

Figure 3 is a perspective view of the exterior of the battery pack of this invention.

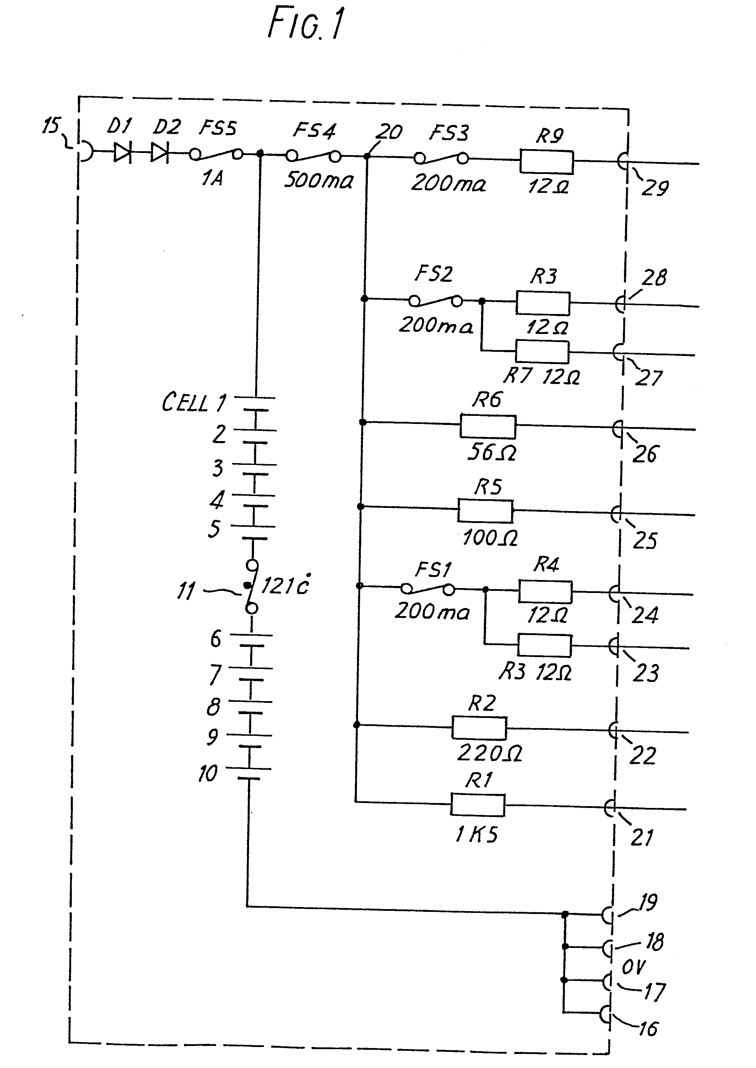

Referring to Figure 1, the power pack comprises ten 1.2 volt nickel-cadmium cells, numbered 1 to 10. The cells are connected in series giving a total voltage of 14 volts with a thermal fuse 11 connected in series between cells 5 and 6. Charging of the cells is effected via a terminal 15, a pair of diodes D1,D2 and a fuse FS5.

The negative end of the series-connected cells is connected to a plurality of commoned negative terminals 16 to 19. The positive end of the cells is connected, via a fuse FS4 of 500 mA, to a junction point 20 at which the supply is split between nine positive terminals 21 to 29. Between each of the terminals 21 to 29 and the junction point 20 is connected a respective resistor R1 to R9 through which the whole current to the respective terminal must pass. Terminals 23, 24, 27, 28 and 29 are protected by respective fuses FS1, FS2 and FS3 each of 200 mA. Each of the resistors R1 to R9 is of the high-power type in order to reduce problems arising from generation of heat within the resistor.

The values of the resistors R1 to R9 are chosen in accordance with the current to be taken from the respective terminals, subject to the requirement that they must not be too low in value in case shorting results in excessive current flow. In the particular application envisaged, the values of the resistors are:-

R1 : 1K5

R2 : 220

R3,R4,R7,R8,R9   =   12
R5   :   100
R6   :   56

It will be noted that even in the worst case of a short between one of terminals 23, 24, 27, 28 or 29 and one of the negative terminals, a maximum current of 1A can flow, this latter current being at zero volts - well below the safe voltage set by present safety regulations.    In the event of such a short there are two series-connected fuses available to protect the circuit - fuse FS4 and one of fuses FS1, FS2 or FS3.   Fuse F4 acts to limit to a safe value the total power which can be dissipated in the pack.   The remaining terminals, having a higher value of series resistor, do not need the second fuse because, even in the event of a short, the maximum power flow would be within safety regulations.

The various terminals of the power pack are used to supply respective items of equipment, or respective sections of a single larger item of equipment.

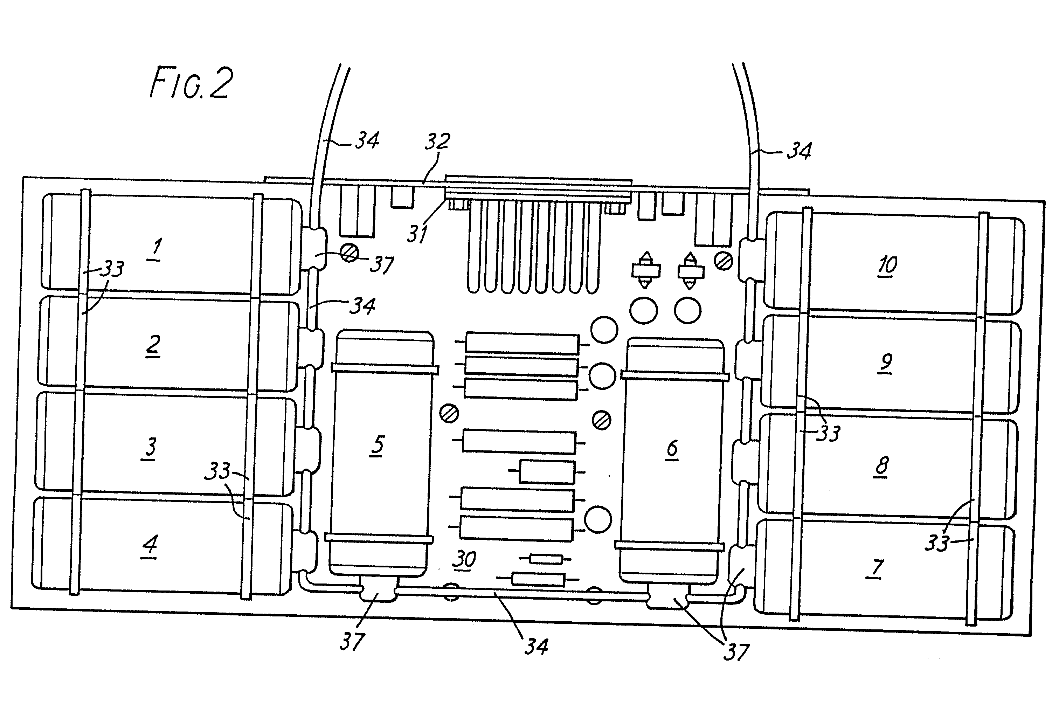

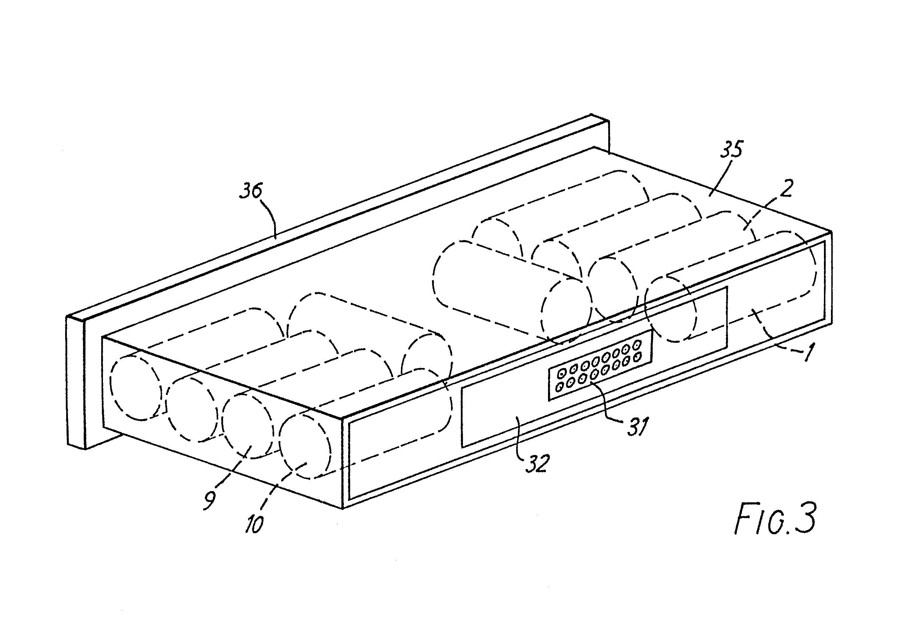

Referring now to Figures 2 and 3, the mechanical construction of the power pack will now be described.   Identical reference numerals have been used where appropriate.

The cells 1 to 10 are initially seated in respective rectangular apertures in a printed circuit board 30 which latter also provides many of the interconnections between components.   The components are grouped between cells 5 and 6, except for the diodes D1, D2 which are situated close to a multi-way terminal block 31 which has pins corresponding to the negative and positive terminals of the power pack.   The terminal block 31 has widely spaced apart pins to comply with safety regulations and is fixed to a rear panel 32 which is attached at the centre of one side edge of the printed circuit board 30 and at right angles thereto.

The individual cells are strapped in place temporarily by means of nylon straps 33.

Venting of the cells is achieved by placing a small cup 37 of plastics material over the vent opening of each cell (these being situated in the present case adjacent the positive terminal of each cell) and sealingly adhering the cup to the cell, thus defining a small air chamber underneath. The combined adhesion and sealing can be effected by any suitable means, for example adhesive or sealant. Use can be made for this purpose of the same material later to be used for encapsulation of the pack (see below). Extending between each of these cups, and interconnecting the respective air chambers, is a capillary tube 34 of plastics material. The tube passes from cell to cell and its ends are taken out to:

1. Allow a check to be made that the tube is not blocked, and

2. Allow a single blockage to occur under operational conditions without imparing the venting of each cell.

The completed unit as shown in Figure 2 is slid into a container 35 (Figure 3) of metal and encapsulating material is poured in to completely encapsulate the printed circuit board, the cells and all of the components, including fuses, of the battery pack. A panel 36 is formed at one side of the container for attachment to an associated item of equipment. For this purpose, the terminal block 31 may take the form of a multi-way male or female connector for direct attachment to a corresponding connector in the associated item of equipment. If a male connector, shielding to BASEEFA specification must be incorporated.

## CLAIMS

1.      A battery power pack for use in hazardous environments, said power pack comprising a battery unit consisting of at least one cell, a plurality of output terminals of one polarity, at least one corresponding output terminal of the opposite polarity, circuit means for connecting the respective terminals of said battery unit to said output terminals in dependence upon the polarity, said circuit means incorporating means for limiting the maximum power supplied between any one output terminal of one polarity and the or its corresponding output terminal of the opposite polarity to a level below that able to generate dangerous sparks.

2.      A power pack as claimed in claim 1 wherein said battery unit consists of a plurality of series-connected cells.

3.      A power pack as claimed in either one of claims 1 or 2 wherein the components of the power pack are housed within a container and are potted with encapsulating material in such a way as to exclude air from the container.

4.      A power pack as claimed in claim 3 wherein the vent output from the or each cell is connected by tubing to the exterior of the container prior to potting.

5.      A power pack as claimed in claim 4 wherein said battery unit consists of a plurality of cells, and wherein said tubing extends from the exterior in a circuit from cell to cell and thence back to the exterior in such a way that both ends of the tubing vent to the exterior.

6.      A power pack as claimed in either one of claims 4 or 5 wherein, prior to potting, the vent output of the or each cell is fitted with a hollow cup into which at least one open end of said tube is inserted in order to allow venting of the cell or cells.

7.      A power pack as claimed in any one of the preceeding claims wherein the cell or cells are of the nickel cadmium type.

## FIG.1

FIG.2

0129965

Fig.3